# EUROPEAN PATENT SPECIFICATION

(11) **EP 1 805 665 B1**
(45) Date of publication and mention of the grant of the patent: **28.03.2018**
(21) Application number: 05802942.2
(22) Date of filing: 30.09.2005
(51) Int. Cl.: G06F 17/30

(54) **STORAGE POLICY MONITORING FOR A STORAGE NETWORK**
ÜBERWACHUNG DER SPEICHERPOLITIK FÜR EIN SPEICHERNETZWERK
CONTROLE DE POLITIQUE DE STOCKAGE POUR RESEAU DE STOCKAGE

(30) Priority: 30.09.2004 US 615002 P
(43) Date of publication of application: 11.07.2007
(73) Proprietor: Cisco Technology, Inc., San Jose, CA 95134 (US)
(72) Inventor: WONG, Chi, Ming, Santa Clara CA 95091-1943 (US); WONG, Thomas, K., Pleasanton, CA 94566 (US); TSIRIGOTIS, Panagiotis, Sunnyvale, CA 94087 (US); IYENGAR, Anand, Mountain View, CA 94041 (US); CHAWLA, Rajeev, Union City, CA 94587 (US); CHAN, Yu Cheong, Mountain View, CA 94040 (US); LIU, Zuqei, Cupertino, CA 95014 (US); SEITZ, Matt, San Jose, CA 95119 (US); SIMPKINS, Richard, Mountain View, CA 94041 (US); SRIKANTAN, Geetha, Palo ALto, CA 94301 (US); GUPTA, Gaurav, Mountain View, CA 94043 (US)
(74) Representative: Kazi, Ilya
(86) International application number: PCT/US2005/035624
(87) International publication number: WO 2006/039689

(56) References cited:
- EP-A2- 1 311 122
- EP-A2- 1 396 789
- JP-A- 2004 054 607
- US-A1- 2002 161 855
- US-A1- 2003 046 270
- US-A1- 2003 220 899
- US-A1- 2004 186 849
- US-B1- 6 442 548
- W. KATSURASHIMA ET AL: "NAS switch: a novel CIFS server virtualization", PROCEEDINGS 20TH. IEEE/11TH. NASA GODDARD CONFERENCE ON MASS STORAGE SYSTEMS AND TECHNOLOGIES. (MSST 2003); SAN DIEGO, CA, USA, APRIL 7-10, 2003, 23 April 2003 (2003-04-23), pages 82-86, XP055334175, US DOI: 10.1109/MASS.2003.1194841 ISBN: 978-0-7695-1914-2

## Description

### BACKGROUND OF THE INVENTION

### FIELD OF THE INVENTION

This invention relates generally to storage networks and, more specifically, to selective file migration in a storage network.

### DESCRIPTION OF RELATED ART

In a computer network, NAS (Network Attached Storage) file servers connected directly to the network provide an inexpensive and easily configurable solution for a storage network. These NAS file servers are self-sufficient because they contain file systems that allow interoperability with clients running any operating system and communication using open protocols. For example, a Unix-based client can use the NFS (Network File System) protocol by Sun Microsystems, Inc. of Santa Clara, California and a Windows-based client can use CIFS (Common Internet File System) by Microsoft Corp. of Redmond, Washington to access files on a NAS file server. However, the operating system does not affect communication between the client and file server. Thus, NAS file servers provide true universal file access.

By contrast, more expensive and powerful SAN (Storage Area Network) file servers use resources connected by Fibre Channel on a back-end, or a dedicated network. A SAN file system is part of the operating system or an application running on the client. But heterogeneous client operating systems may require additional copies of each file to be stored on the storage network to ensure compatibility on the SAN file server. Additionally, communication between file servers on a SAN use proprietary protocols and thus are typically provided by a common vendor. As a result, NAS file servers are preferred when price and ease of use are major considerations. However, the benefits of NAS storage networks over SAN storage networks also have drawbacks.

One drawback with NAS file servers is that there is no centralized control. Accordingly, each client must maintain communication channels between each of the NFS file servers separately. When NAS file servers are either added or removed from the storage network, each client must mount or unmount directories for the associated storage resources as appropriate. This is particularly inefficient when there are changes in hardware, but not in the particular files available on the network, such as when a failing NAS file server is swapped out for an identically configured back-up NAS file server.

A related drawback is that a client must be reconfigured each time a file is relocated within the storage network, such as during file migration or file replication. The client generates a NAS file handle that identifies a physical location of the directory or file object on the file server. To access the object, the client sends an object access request directly to the NAS file server. When the file is relocated to a different NAS file server, subsequent requests for access to the file require a new look-up to locate the file and generate a new NAS file handle.

An additional drawback is that NAS file servers can become consumed with handling I/O (Input/Output) requests associated with file manipulations and accesses. As a result, additional processing tasks such as queries can unduly burden the NAS file servers. The file server typically walks a tree-structured directory tree in search of information requested by the query, and if there is more than one file system, each file system is individually walked. Consequentially, the file server may either become less responsive to I/O requests or have high latency in responding to the query. In some contexts, high latency will make the results stale.

Furthermore, NAS file servers can become unorganized and inefficient by, for example, storing critical data with other non-critical data. For example, large multimedia collections of MP3s used for leisure by employees can increase latency time in receiving information more germane to the productivity of an enterprise such as financial records. In another example, rarely accessed files may be stored on a premium, high bandwidth file server while often accessed files may be stored on a commodity, lower bandwidth server.

US 2002/161855 discloses a method that allows scalability of file storage in terms of capacity and performance through a symmetric multicomputer architecture with shared storage, in which storage and protocol processing resources can be added to (or removed from) the system without any need of recognizing and/or explicitly migrating the data stored in the system. EP 1 311 122 discloses a video server for communicating content to a plurality of clients, including one or more network attached storage (NAS) servers, each NAS server storing content files for access by one or more clients; a switch for connecting the clients to the NAS servers in response to control signals, via a communication link; and a management control station connected to the clients and the NAS servers via the switch. US Patent No. 6,442,548 discloses that information in a database is accessed with a computer system by transforming a file system request from an application into a database query and retrieving information corresponding to the database query from the database. The retrieved information is made available to the application as a file system object, for example, as a directory, a file, a link or a collection thereof. JP 2004 054607 discloses a pseudo file system that manages information on the location of an accessed object at a shared junction between servers. When a request received from a client is an inquiry request that designates an object, an intercept determining means intercepts and sends the request to an inquiry request solution means instead of transferring it to the server. Upon receiving the inquiry request from the intercept determining means, the inquiry request solution means inquires of the pseudo file system about information on the location of the object designated by the inquiry request. The inquiry request solution means sends back to the client the inquiry request that is created on the basis of the location information obtained from the pseudo file system.

US 2003/046270 discloses automated techniques for storing data in a data storage environment. Techniques are provided for determining storage locations for data in a heterogeneous storage environment based upon storage policies configured for the storage environment. The data is stored in storage locations that enable efficient data access while optimizing the use of available storage resources with minimum human intervention. An article entitled "NAS switch: a novel CIFS server virtualization" by W. Katsurashima et al, published in Proceedings of the 20th IEEE/11th NASA Goddard Conference on Mass Storage Systems and Technologies, pages 82-86 discloses a CIFS Server virtualization method which requires no proprietary software or hardware for clients or NAS units. The method is implemented as an in-band network application between clients and NAS units, and it provides users and administrators with a single virtual NAS system that incorporates all their units.

Therefore, what is needed is a network device to provide selectively migrate objects between file servers on a storage network. Furthermore, there is a need for identifying files to be migrated without burdening the file servers in, for example, servicing I/O requests.

### BRIEF SUMMARY OF THE INVENTION

The present invention provides selective migration in a storage network in accordance with a policy. The policy can include rules that establish which objects are migrated from a source file server to a destination file server based on file attributes (e.g., file type, file size, last access time, frequency of access). For example, large multimedia files that consume I/O bandwidth on expensive or critical file servers, without adding much value to enterprise productivity, can be migrated to a commodity or less critical file server. In one embodiment, a NAS (Network Attached Storage) switch in the data path of a client and NAS file servers on the storage network, implements selective migration using file handles that are independent of locations on the storage network. Mapping between the file handles which are static and locations which can be dynamic, allows the client to access objects after migration using file handle that persists through the migration process.

An embodiment of a system configured according to the present invention comprises the NAS switch in communication with the client on a front-end of the storage network, and both a source file server and a destination file server on a back-end. The NAS switch associates NAS file handles (*e.g.,* CIFS file handles or NFS file handles) received from the source and destination file servers with switch file handles that are independent of a location. The NAS switch then exports switch file handles to the client. In response to subsequent object access requests from the client, the NAS switch substitutes switch file handles with appropriate NAS file handles for submission to the appropriate NAS file server.

Advantageously, a network device can organize storage networks according to file types and other attributes in order to reserve premium file servers for critical activities, such as servicing I/O requests.

### BRIEF DESCRIPTION OF THE DRAWINGS

FIG. 1 is a high-level block diagram illustrating a storage network system according to one embodiment of the present invention.
FIG. 2 is a block diagram illustrating the NAS switch according to one embodiment of the present invention.
FIG. 3 is a block diagram illustrating a selective migration module according to one embodiment of the present invention.
FIG. 4 is a high-level flow chart illustrating a method for providing transparent file migration in a NAS storage network according to one embodiment of the present invention.
FIG. 5 is a flow chart illustrating a method of associating original NAS file handles with switch file handles according to one embodiment of the present invention.
FIG. 6 is a flow chart illustrating a method for providing selective migration in accordance with a policy according to one embodiment of the present invention.

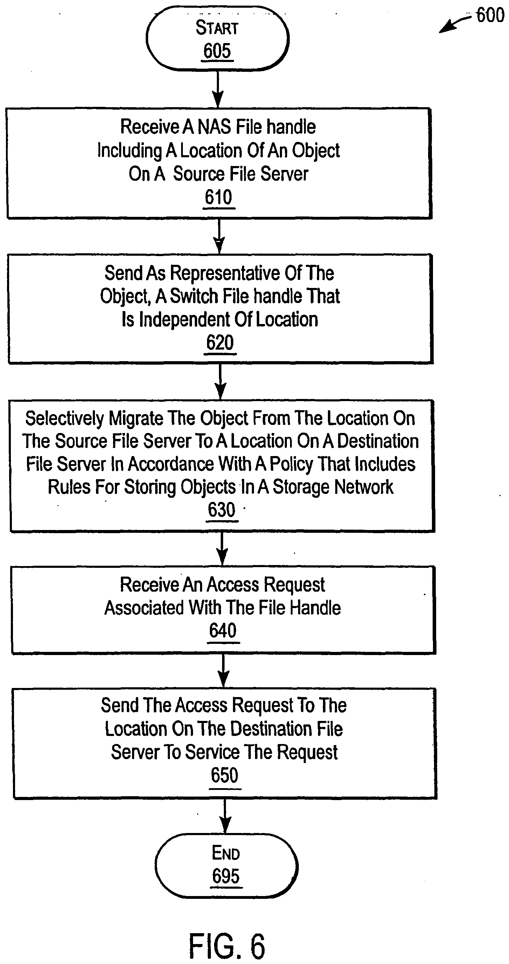

FIG. 6 is a flow chart illustrating a method for providing selective migration in accordance with a policy according to another embodiment of the present invention.

### DETAILED DESCRIPTION OF THE INVENTION

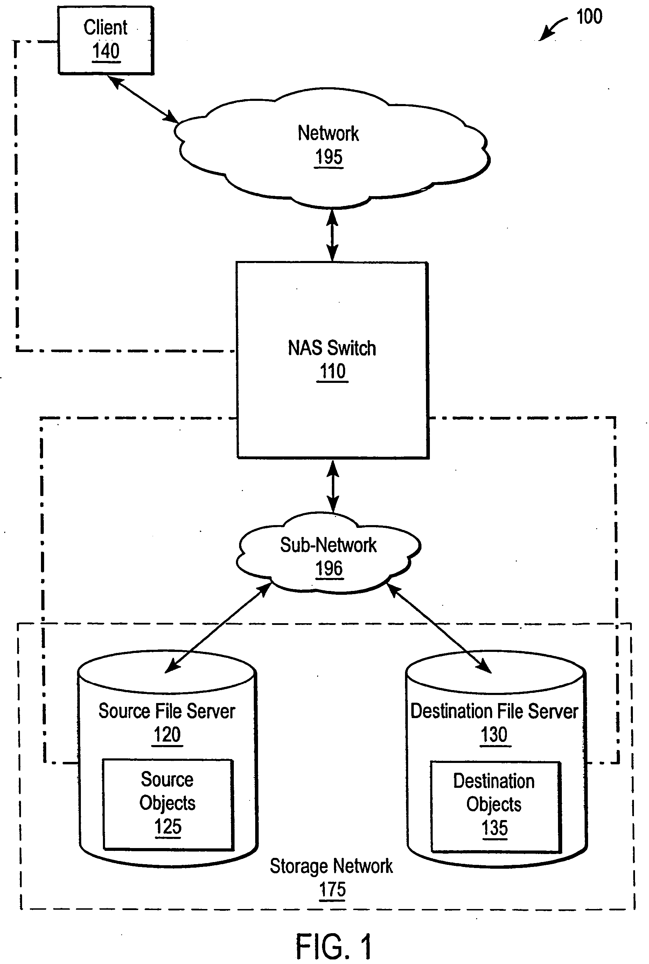

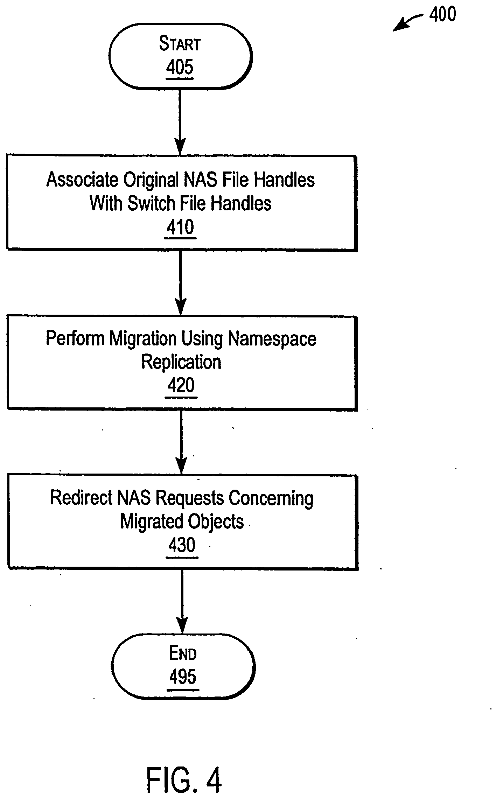

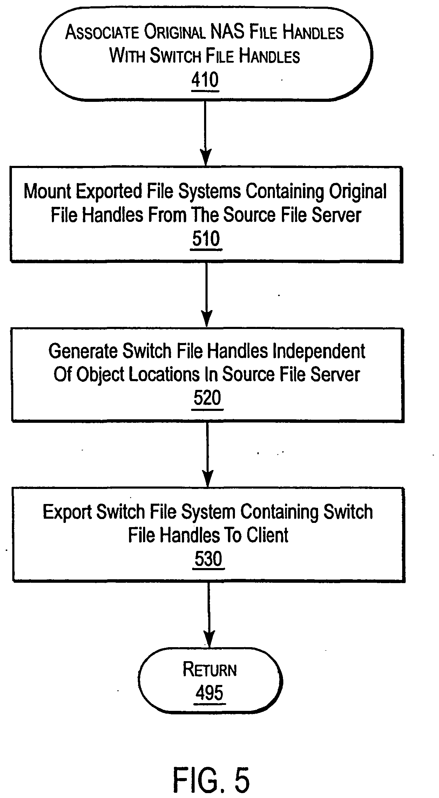

The present invention provides selective migration in a storage network in accordance with a policy. The policy can include rules that establish which objects are migrated from a source file server to a destination file server. For example, large multimedia files that consume bandwidth on expensive or critical file servers, without adding much value to enterprise productivity, can be migrated to a commodity or less critical file server. In one embodiment, a NAS (Network Attached Storage) switch in the data path of a client and NAS file servers on the storage network, implements selective migration using file handles that are independent of locations on the storage network. Mapping between the file handles which are static and locations which can be dynamic, allows the client to access objects after migration using file handle that persists through the migration. Some embodiments of a system are described with respect to FIGS. 1-3, and some embodiments of a method operating therein are described with respect to FIGS. 4-6.

FIG. 1 is a high-level block diagram illustrating a storage network system 100 according to one embodiment of the present invention. The system 100 comprises a NAS switch 110 and a client 140 coupled to a network 195. The NAS switch 110, a source file server 120, and a destination file server 130, are each coupled in communication through a sub-network 196. Note that there can be various configurations of the system 100, such as embodiments including additional clients 140, additional source and/or destination file servers 120, 130, and additional NAS switches 110. The system 100 components are implemented in, for example, a personal computer with an x86-type processor executing an operating system and/or an application program, a workstation, a specialized NAS device with an optimized operating system and/or application program, a modified server blade, etc. In one embodiment, the storage network 175 comprises a NAS using protocols such as NFS and CIFS. In another embodiment, the storage network 175 comprises a combination of NAS, SAN, and other types of storage networks. In yet another embodiment the storage network 175 comprises a decentralized standard or proprietary storage system other than NAS.

The NAS switch 110 selectively migrates objects from a location on the source file server 120 to a location on the destination file server 130. Selective migration can determine which objects to migrated based on file attributes such as file type, file size, file access frequency, other file conditions, schedules, and the like, as determined by a policy. The policy can include rules that delineate certain actions in accordance with certain file attributes or conditions. In one embodiment, the NAS switch 110 can perform a rehearsal that shows the effects of a policy in a report. The policy can be iteratively adjusted to reach desired results.

The NAS switch 110 provides continuous transparency to the client 140 with respect to object management. Specifically, the NAS switch 110 can off-load tasks related to physical configurations, object management, object migration, object replication, efficient storage and/or other services on the storage network 175. Preferably, the NAS switch 110 emulates file server processes to the client 140 and emulates client processes to the file servers 120, 130. Accordingly, the client 140 is unaware of the NAS switch 110 since the NAS switch 110 is able to redirect NAS requests intended for the source file server 120 to appropriate locations on the destination file server 130. Thus, the client,140 submits object requests, such as file writes and directory reads, directly to the NAS switch 110. Likewise, the file servers 120, 130 are unaware of the NAS switch 110 since the NAS switch 110 is able to resubmit requests, contained in server file handles, as if they originated from the client 140. To do so, the NAS switch 110 can use mapping, translating, bridging, packet forwarding, other network interface functionality, and other control processes to perform file handle switching, thereby relieving the client 140 of the need to track changes in a file's physical location.

In one embodiment, the NAS switch 110 receives exported file system directories from the file servers 120, 130 containing NAS switch handles. To create compatibility between the client 140 and the NAS switch 110, the NAS switch 110 maps the file system directories to internal switch file systems which it sends to the client 140. To request an object, the client 140 traverses an exported switch file system and selects a switch file handle which it sends to the NAS switch 110 along with a requested operation.

In general, NAS file handles uniquely identify objects, such as a directory file server, on the file servers 120, 130, such as a directory or file, as long as that object exists. NAS file handles are file server specific, and are valid only to the file servers 120, 130 that issued the file handles. The process of obtaining a file handle from a file name is called a look-up. The NAS file handle may be formatted according to protocols such as NFS or CIFS as discussed in further detail below, *e.g.,* with reference to Tables 1A and 1B. By contrast, a switch file handle identifies a directory or file object independent of location, making it persistent through file replications, migrations, and other data transfers. The switch file handle can be a modified NAS file handle that refers to an internal system within the NAS switch 110 rather than the source file server 120. This enables the NAS switch 110 in mapping persistent file handles to a choice of alternative NAS file handles. An original NAS file handle refers to an initial object location on the source file server 120. A stored NAS file handle refers to a NAS file handle, stored as an object on the file servers 120, 130, which points to an alternative file location.

Object access requests handled by the NAS switch 110 include, for example, directory and/or file reads, writes, creation, deletion, moving, and copying. A namespace access refers to an operation accessing or modifying the namespace such as look-up, rename, delete, or create. A file access refers to an operation accessing or modifying files such as read or write. An object can refer to a directory object or a file object. Directory objects can further comprise sub-directories and file objects within directory. As used herein, various terms are used synonymously to refer to a location of an object prior to migration (*e.g.,* "primary"; "source"; "original"; and "first") and various terms are used to refer to a location of the same object after migration (*e.g.,* "replica"; "destination"; "substitute"; and "second"). Further embodiments of the NAS switch 110 and methods operating therein are described below.

The client 140 accesses resources on the file servers 120, 130 by submitting a switch file handle to the NAS switch 110, intended for the source file server 120. To find the switch handle, the client 140 first mounts an exported switch file system containing switch file handles. The client 140 looks-up an object to obtain its file handle and submits an associated request. From the perspective of the client 140, transactions are carried out by the file servers 120, 130 having object locations that do not change. Thus, the client 140 interacts with the NAS switch 110 before and after a file replication in the same manner. A user of the client 140 can submit operations through a command line interface, a windows environment, a software application, or otherwise. In one embodiment, the NAS switch 110 further provides access to a storage network 175 other than a NAS storage network.

The source file server 120 is the default or original network file server for the client 140 before file migration. The source file server 120 further comprises source objects 125, which include namespace directories and files such as enterprise data, records, database information, applications, and the like. The source file server 120 can store a table of migrated directories maintained by the NAS switch 110 that correlate results from namespace migration. Moreover, the source file server 120 can store a file handle migration table, maintained by the NAS switch 110, denoting each migrated directory and file object. The source file server 120 comprises, for example, a personal computer using an x86-type processor with an operating system and/or an application, a workstation, a specialized NAS device with an optimized operating system and/or application, a modified server blade, etc.

The destination file server 130 becomes the primary network file server used by the NAS switch 110 after file migration. The destination file server 130 further comprises destination objects 135, which include the replicated namespace directories and source files. The destination file server 130 can comprise the same hardware and/or software as described with reference to the source file server 120. The source and destination file servers 120, 130 are preferably NAS file server, but can also be file servers using other decentralized protocols that do not inherently support file migration. Further embodiments of the source and destination file servers 120, 130 and related methods are described below.

The network 195 facilitates data transfers between connected hosts (*e.g.,* 110, 140). The connections to the network 195 may be wired and/or wireless, packet and/or circuit switched, and use network protocols such as TCP/IP (Transmission Control Protocol/Internet Protocol), IEEE (Institute of Electrical and Electronics Engineers) 802.11, IEEE 802.3 (*i.e.,* Ethernet), ATM (Asynchronous Transfer Mode), or the like. The network, 195 comprises, for example, a LAN (Local Area Network), WAN (Wide Area Network), the Internet, and the like. In one embodiment, the NAS switch 110 acts as a gateway between the client 140, connected to the Internet, and the directory file server 120, and the shadow file servers 130, connected to a LAN. The sub-network 196 is preferably a local area network providing optimal response time to the NAS switch 110. In one embodiment, the sub-network 196 is integrated into the network 195.

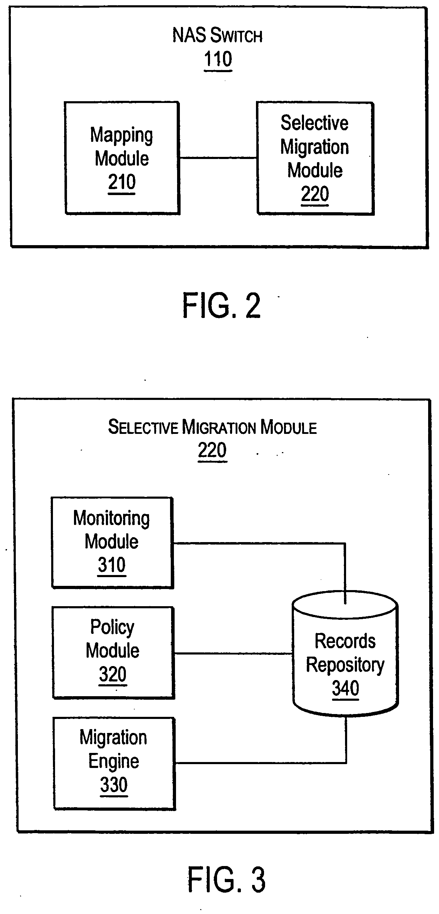

FIG. 2 is a block diagram illustrating the NAS switch 110 according to one embodiment of the present invention. The NAS switch 110 comprises a mapping module 210 and a selective migration module 220. Generally, the mapping module 210 handles file handles I/O transactions associated with objects, and sends information about successful I/O transactions to the selective migration module 220 for tracking updates to since the last walk of the tree-structured file servers. Note that modules are merely exemplary groupings of functionality.

Prior to file migration, the mapping module 210 receives a switch file handle with a request from the client 140 which it uses to find an original NAS file handle. The mapping module 210 submits the original NAS file handle with the request to the source file server 120. If the object has yet to change locations in the storage network 175, the mapping module 210 uses the original NAS file handle. The mapping module 210 can submit the switch file handle to the migration module 220 to determine if the object is part of a data migration. Also, the file server interface 220 can submit the switch file handle to the redirection module 230 to determine if the object has completed data migration. In either case, an appropriate NAS file handle is returned for the mapping module 210 to use in forwarding the client request to the appropriate file server 120, 130

After file migration, the mapping module 210 looks-up switch file handles received from the client 140 in the file handle migration table. If an object has been migrated, the redirection module outputs a destination NAS file handle corresponding to a location on the destination file server 130.

The selective migration module 220 receives information about successfully I/O transactions from the mapping module 210. In other embodiments, the selective migration module 220 can intercept transactions headed for the mapping module 210, or receive a duplicate of transactions sent to the mapping module 210. Upon executing a policy to migrate objects, the selective migration module 220 can update file locations in the mapping module 210.

FIG. 3 is a block diagram illustrating a selective migration module 220 according to one embodiment of the present invention. The selective migration module 220 comprises a monitoring module 310, a policy module 320, a migration engine 330, and a records repository 340. Generally, the records repository is populated using a traversal (walk) of tree-structured directories or shares, and records are updated with information about transactions with objects in the directories. The policy module 320 can perform policy-based migration through query or sorting interactions with the records repository 340.

The monitoring module 310 receives information relating to successful I/O transactions involving objects. The information can form one or more logs. For example, an access log can be updated each time a file or directory is read. Logs can be maintained based on the importance of tracked transactions. For example, while all file or directory creations are tracked, in one embodiment, only the last file modification is tracked. In another optimization, an access log can count accesses over an hour without recording the time of each access. The monitoring module 310 periodically sends the logs to the records repository 340 for processing (e.g., once an hour).

The policy module 320 stores rules for selective migration. The rules can be preconfigured or created by a network administrator. The rules can be Boolean combinations of conditions. For example, FILE TYPE IS MPEG and FILE SIZE IS MORE THAN 100 MEGABYTES. The policy module 320 can implement rules with searches on the records repository 340 to identify files meeting certain conditions. In one embodiment, a user interface (e.g., viewed in a web browser) can allow a network administrator to configure rules. The policy module 320 can be triggered periodically on a per-policy basis such as once a day or once a week.

The migration engine 330 can migrate file identified by the policy module 320. For example, each of the files that have not been accessed in the last year can be moved to a dedicated filer server for rarely accessed files. In one embodiment, the migration engine 320 migrates the namespace associated with each object prior to migrating data associated with each object.

The records repository 340 can store records associated with objects in the tree-structured directories by traversing the tree-structured directories. In response to receiving logs from the monitoring module 310, the records repository 340 can update records. Periodically, the records repository 340 can synch with the directories with traversals.

FIG. 6 is a flow chart illustrating a method 600 for providing selective migration in accordance with a policy according to one embodiment of the present invention. A NAS file handle including a location of the object on a source file server is received 610. A switch file handle that is independent of the location of the object is sent as representative of the object 620. The object is selectively migrated 630 from the location on the source file server to a location on a destination file server in accordance with a policy that includes rules for storing objects in the storage network. An access request associated with the switch file handle is received 640. The access request is sent 650 to the location on the destination file server.

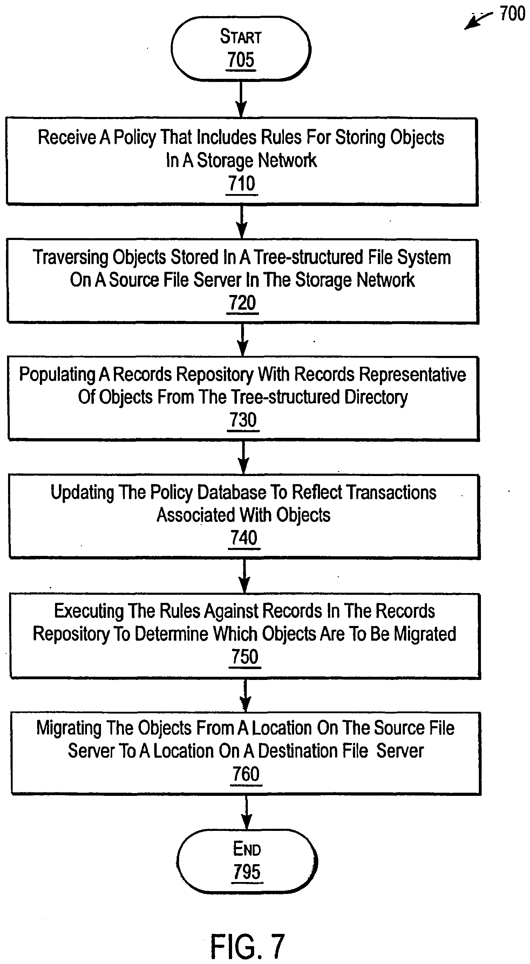

FIG. 7 is a flow chart illustrating a method 700 for providing selective migration in accordance with a policy according to another embodiment of the present invention. A policy that includes rules for storing objects in the storage network is received 710. Objects stored in a tree-structure on a source file server in the storage network are traversed 720. A policy database (or records repository) is populated 730 with records representative of the tree-structure. The policy database is updated 740 to reflect transactions associated with the objects. The rules are executed 750 against records in the policy database to determine which objects are to be migrated. The objects are migrated 760 from a location on the source file server to a location on a destination file server.

The accompanying description is for the purpose of providing a thorough explanation with numerous specific details. Of course, the field of storage networking is such that many different variations of the illustrated and described features of the invention are possible. Those skilled in the art will thus undoubtedly appreciate that the invention can be practiced without some specific details described below, and indeed will see that many other variations and embodiments of the invention can be practiced. For example, although the present invention is described with reference to storage networks operating under the NAS protocol, it can similarly be embodied in future protocols for decentralized storage networks other than NAS, or in mixed protocol networks. Accordingly, the present invention should not be understood as being limited to the specific implementations described below, but only by the claims that follow.

The processes, features, or functions of the present invention can be implemented by program instructions that execute in an appropriate computing device. Example computing devices include enterprise servers, application servers, workstations, personal computers, network computers, network appliances, personal digital assistants, game consoles, televisions, set-top boxes, premises automation equipment, point-of-sale terminals, automobiles, and personal communications devices. The program instructions can be distributed on a computer readable medium, storage volume, or the Internet. Program instructions can be in any appropriate form, such as source code, object code, or scripts.

## Claims

1. A method, at a Network Attached Storage, NAS, switch (110), for selectively migrating data objects in a storage network (175), comprising:
receiving (710) a policy that includes selective migration rules for determining which data objects (125) are to be selectively migrated from one file server (120) to another file server (130) in the storage network (175) based at least in part on file attributes that specify an attribute of the data objects, but are not the data objects themselves;
traversing (720) data objects (125) stored in a tree-structure on a source file server (120) in the storage network, so as to populate (730) a records database with records representative of the data objects in the tree-structure, the records comprising the file attributes;
sending to a client a switch file handle associated with one of the data objects, the switch file handle being independent of a location of the data object;
mapping the switch file handle to a NAS file handle, wherein the NAS file handle comprises a location of the data object on the source file server;
updating (740) the records database to reflect transactions on the source file server (120), including I/O transactions, associated with the data objects;
executing (750) the selective migration rules against records in the records database to determine which data objects (125) are to be migrated;
selectively migrating (760) the determined data objects (125) from a location on the source file server (120) to a location on a destination file server (130); and
updating the NAS file handle of the data objects to include the location of the data objects on the destination file server.

2. The method of claim 1, wherein the policy includes rules regarding last access time or frequency of access of a file server.

3. The method of either claim 1 or claim 2, wherein the data objects comprise directories having data objects representative of sub-directories and files.

4. The method of any preceding claim, wherein the data objects comprise files.

5. The method of any preceding claim, wherein data objects having a particular size or size range are migrated.

6. The method of any preceding claim, wherein data objects having a particular ownership are migrated.

7. The method of any preceding claim, wherein data objects having a particular data type are migrated.

8. The method of any preceding claim, wherein the NAS file handle comprises one from the group consisting of a NFS (Network File System) file handle and a CIFS (Common Internet File System) file handle.

9. The method of any preceding claim, wherein the data objects are accessible by the client on the source file server and the destination file server, via the NAS switch, so that the client can read, write, create, delete, move or copy the data objects.

10. A computer program product including executable instructions which, when executed in a processing system, cause the processing system to perform a method according to any preceding claim.

11. A NAS (Network Attached Storage) switch to selectively migrate objects in a storage network, comprising:
means for carrying out the method of any one of claims 1 to 9.

## Patentansprüche

1. Verfahren an einem netzwerkverbundenen Speicher-(Network Attached Storage, NAS) Switch (110) zum selektiven Migrieren von Datenobjekten in einem Speichernetzwerk (175), wobei das Verfahren Folgendes umfasst:
Empfangen (710) einer Richtlinie, die selektive Migrationsregeln umfasst, zum Bestimmen, welche Datenobjekte (125) selektiv von einem Dateiserver (120) zu einem anderen Dateiserver (130) in dem Speichernetzwerk (175) migriert werden sollen, mindestens teilweise basierend auf Dateiattributen, die ein Attribut der Datenobjekte angeben, jedoch nicht die Datenobjekte selbst sind;
Traversieren (720) von Datenobjekten (125), die in einer Baumstruktur auf einem Quelldateiserver (120) in dem Speichernetzwerk gespeichert sind, um eine Datensatzdatenbank mit Datensätzen zu füllen (730), die für die Datenobjekte in der Baumstruktur repräsentativ sind, wobei die Datensätze die Dateiattribute umfassen;
Senden eines Switch-Dateihandles, das zu einem der Datenobjekte gehört, zu einem Client, wobei das Switch-Dateihandle unabhängig von einem Ort des Datenobjekts ist;
Zuordnen des Switch-Dateihandles zu einem NAS-Dateihandle, wobei das NAS-Dateihandle einen Ort des Datenobjekts auf dem Quelldateiserver umfasst;
Aktualisieren (740) der Datensatzdatenbank, um Transaktionen auf dem Quelldateiserver (120) einschließlich E/A-Transaktionen, die den Datenobjekten zugeordnet sind, widerzuspiegeln;
Ausführen (750) der selektiven Migrationsregeln in Bezug auf Datensätze in der Datensatzdatenbank, um zu bestimmen, welche Datenobjekte (125) migriert werden sollen;
selektives Migrieren (760) der bestimmten Datenobjekte (125) von einem Ort auf dem Quelldateiserver (120) zu einem Ort auf einem Zieldateiserver (130); und
Aktualisieren des NAS-Dateihandle der Datenobjekte, um den Speicherort der Datenobjekte auf dem Zieldateiserver einzuschließen.

2. Verfahren nach Anspruch 1, wobei die Richtlinie Regeln bezüglich der letzten Zugriffszeit oder Häufigkeit des Zugriffs eines Dateiservers umfasst.

3. Verfahren nach Anspruch 1 oder Anspruch 2, wobei die Datenobjekte Verzeichnisse mit Datenobjekten umfassen, die für Unterverzeichnisse und Dateien repräsentativ sind.

4. Verfahren nach einem der vorhergehenden Ansprüche, wobei die Datenobjekte Dateien umfassen.

5. Verfahren nach einem der vorhergehenden Ansprüche, wobei Datenobjekte mit einer bestimmten Größe oder einem bestimmten Größenbereich migriert werden.

6. Verfahren nach einem der vorhergehenden Ansprüche, wobei Datenobjekte mit einem bestimmten Besitz migriert werden.

7. Verfahren nach einem der vorhergehenden Ansprüche, wobei Datenobjekte mit einem bestimmten Datentyp migriert werden.

8. Verfahren nach einem der vorhergehenden Ansprüche, wobei das NAS-Dateihandle eines aus der Gruppe umfasst, die aus einem Netzwerkdateisystem- (Network File System, NFS) Dateihandle und einem gemeinsamen Internetdateisystem-(Common Internet File System, CIFS) Dateihandle besteht.

9. Verfahren nach einem der vorhergehenden Ansprüche, wobei von dem Client auf dem Quelldateiserver und dem Zieldateiserver über den NAS-Switch auf die Datenobjekte zugegriffen werden kann, damit der Client die Datenobjekte lesen, schreiben, erstellen, löschen, verschieben oder kopieren kann.

10. Computerprogrammprodukt, das ausführbare Anweisungen umfasst, die, wenn sie in einem Verarbeitungssystem ausgeführt werden, das Verarbeitungssystem veranlassen, ein Verfahren nach einem der vorhergehenden Ansprüche auszuführen.

11. NAS-Switch (Network Attached Storage) zum selektiven Migrieren von Objekten in einem Speichernetzwerk, der Folgendes umfasst:
ein Mittel zur Durchführung des Verfahrens nach einem der Ansprüche 1 bis 9.

## Revendications

1. Procédé, au niveau d'un commutateur NAS (Network Attached Storage) (110), pour migrer sélectivement des objets de données dans un réseau de stockage (175), comprenant ;
la réception (710) d'une politique qui comporte des règles de migration sélective pour déterminer les objets de données (125) qui doivent être sélectivement migrés depuis un serveur de fichiers (120) vers un autre serveur de fichiers (130) dans le réseau de stockage (175) en fonction au moins en partie d'attributs de fichier qui spécifient un attribut des objets de données, mais ne sont pas les objets de données eux-mêmes ;
la traversée (720) d'objets de données (125) stockés dans une structure arborescente sur un serveur de fichiers source (120) dans le réseau de stockage, de manière à peupler (730) une base de données d'enregistrements avec des enregistrements représentatifs des objets de données dans la structure arborescente, les enregistrements comprenant les attributs de fichier ;
l'envoi à un client d'un descripteur de fichier de commutation associé à l'un des objets de données, le descripteur de fichier de commutation étant indépendant de l'emplacement de l'objet de données ;
la mise en correspondance du descripteur de fichier de commutation avec un descripteur de fichier NAS, dans lequel le descripteur de fichier NAS comprend un emplacement de l'objet de données sur le serveur de fichiers source ;
l'actualisation (740) de la base de données d'enregistrements pour refléter les transactions sur le serveur de fichiers source (120), y compris les transactions d'E/S, associées aux objets de données ;
l'exécution (750) des règles de migration sélective par rapport aux enregistrements dans la base de données d'enregistrements pour déterminer les objets de données (125) qui doivent être migrés ;
la migration sélective (760) des objets de données (125) déterminés d'un emplacement sur le serveur de fichiers source (120) à un emplacement sur un serveur de fichiers destinataire (130) ; et
l'actualisation du descripteur de fichier NAS des objets de données pour inclure l'emplacement des objets de données sur le serveur de fichiers destinataire.

2. Procédé selon la revendication 1, dans lequel la politique comporte des règles concernant le dernier temps d'accès ou la fréquence d'accès d'un serveur de fichiers.

3. Procédé selon la revendication 1 ou la revendication 2, dans lequel les objets de données comprennent des répertoires d'objets de données représentatifs de sous-répertoires et de fichiers.

4. Procédé selon l'une quelconque des revendications précédentes, dans lequel les objets de données comprennent des fichiers.

5. Procédé selon l'une quelconque des revendications précédentes, dans lequel les objets de données ayant une taille ou une plage de taille particulière sont migrés.

6. Procédé selon l'une quelconque des revendications précédentes, dans lequel les objets de données ayant un propriétaire particulier sont migrés.

7. Procédé selon l'une quelconque des revendications précédentes, dans lequel les objets de données ayant un type de données particulier sont migrés.

8. Procédé selon l'une quelconque des revendications précédentes, dans lequel le descripteur de fichier NAS comprend un descripteur parmi le groupe consistant en un descripteur de fichier NFS (Network File System) et un descripteur de fichier CIFS (Common Internet File System).

9. Procédé selon l'une quelconque des revendications précédentes, dans lequel les objets de données sont accessibles par le client sur le serveur de fichiers source et le serveur de fichiers destinataire, par l'intermédiaire du commutateur NAS, de telle sorte que le client puisse lire, écrire, créer, supprimer, déplacer ou copier les objets de données.

10. Produit de programme informatique comportant des instructions exécutables qui, à leur exécution dans un système de traitement, amènent le système de traitement à exécuter un procédé selon l'une quelconque des revendications précédentes.

11. Commutateur NAS (Network Attached Storage) servant à la migration sélective d'objets dans un réseau de stockage, comprenant :
des moyens pour exécuter le procédé selon l'une quelconque des revendications 1 à 9.
